Europäisches Patentamt

(19) European Patent Office

Office européen des brevets

(11) Publication number: **0 016 245**
**B1**

(12) **EUROPEAN PATENT SPECIFICATION**

(45) Date of publication of patent specification: **12.01.83**

(51) Int. Cl.³: **F 24 J 3/02, G 02 B 5/17**

(21) Application number: **79103760.9**

(22) Date of filing: **02.10.79**

(54) A system for collecting solar energy.

(43) Date of publication of application:
**01.10.80 Bulletin 80/20**

(45) Publication of the grant of the patent:
**12.01.83 Bulletin 83/2**

(84) Designated Contracting States:
**DE FR GB IT NL**

(56) References cited:
**DE - A - 2 228 501**
**DE - A - 2 648 704**
**DE - A - 2 651 738**
**DE - A - 2 700 916**
**DE - A - 2 757 155**
**DE - B - 2 545 224**
**FR - A - 2 291 506**
**US - A - 3 752 559**
**US - A - 4 060 071**
**US - A - 4 088 115**
**US - A - 4 121 567**
**US - A - 4 148 295**

(73) Proprietor: **Ochiai, Tsurunosuke**
**3169-6, Kumanohara-machi**
**Karatsu-shi, Saga-ken, 847 (JP)**

(72) Inventor: **Ochiai, Tsurunosuke**
**3169-6, Kumanohara-machi**
**Karatsu-shi, Saga-ken, 847 (JP)**

(74) Representative: **Blumbach Weser Bergen Kramer**
**Zwirner Hoffmann Patentanwälte**
**Radeckestrasse 43**
**D-8000 München 60 (DE)**

## A system for collecting solar energy

This invention relates to a system for collecting solar energy.

Several different systems for collecting solar energy, or the radiant energy of sunlight, have been previously proposed. As an example, in a solar-electric power plant or a solar furnace, to produce a high temperature sunlight is concentrated on to a receiver by a large number of mirrors which are arranged to follow the sun and which accordingly are often called heliostats; each mirror must be individually moved by clockwork for strictly reflecting the solar rays into a fixed direction and thus to the receiver, so that inevitably the system is very complicated and is of a large scale. In another form of such a system, a unit collector such as a giant parabolic mirror or a Fresnel lens must be also designed to follow the sun, otherwise the incident solar rays cannot be focused at substantially one point, and the level of efficiency in collecting solar energy is markedly reduced. Many attempts have been made to improve these follower means, but they are still complicated and expensive.

From the DE—A—27 00 916 is known a photo-thermic converter for collecting energy of sunlight. This converter uses a metal plate being covered by a layer of a material having a great absorbing power with respect to incident light rays. Fixed to said layer is a fibre net extending substantially over the entire surface of the plate. The fibres making up the fibre net have preferably a length of about 5 cm and a diameter of about 70 $\mu$m. When using this known converter it is arranged such that the fibre net faces the sun and that the metal plate is heated by light rays having been transmitted through the fibres. The task of the fibre net is to reduce any thermic losses toward the front of the converter and to transmit the incident light rays in the best possible manner.

From the DE—A—26 48 704 is known a light conducting element which is intended to collect electro-magnetic rays of a predetermined viewing field and to project them onto a photoelectric converter with high efficiency.

From the US—A—4 148 295 is known an apparatus for collecting solar energy. This apparatus includes a horizontally mounted solar collector utilizing a vertical deflector assembly, a stationary reflector and a collector. The deflector assembly contains a plurality of vanes which alter the direction of the solar energy to the vertical, while constantly keeping the same side of the deflector facing the sun. The vertical rays are then reflected off of the stationary reflector and are then absorbed by the collector. This particular configuration reduces the cost of the reflector by enabling the reflector to remain relatively immobile while still allowing the reflector to be adjusted for fine focusing.

The reflector assembly consists of a plurality of reflector plates constructed of standard reflectional material. The plates are attached to a collection apparatus frame including vertical supports. The plates are conical so that the solar energy will be focused to the center of a reflector member contained upon the collector.

The invention therefore seeks to provide a system for collecting solar energy or the radiant energy of sunlight, at a high level of efficiency and therefore lower cost.

The present invention thus provides a system for collecting radiant energy of sunlight, including a faceplate for receiving parallel rays of sunlight, which is made up of a large number of optical fibres which are each of a diameter ranging from 0.5 micron to 2.0 micron and which are combined coherently in a bundle perpendicular to the plane of the faceplate, and a means for focusing the parallel rays issuing from the optical fibres of the faceplate thereby to concentrate the radiant energy outside the system.

Thus, in the system of the invention, there is no need for a follower means operable to align the faceplate with the direction of the sun, the system may be very thin, in the form of a parabolic mirror, and the solar energy can be collected underneath the collecting system. The absence of a follower mechanism means that the system can be less expensive and inherently more reliable than the previously proposed systems with follower mechanisms.

The invention will now be described by way of example with reference to the accompanying drawings which illustrate embodiments and in which:

Figure 1 shows directivity patterns based on Fraunhofer diffraction, occurring when beams of parallel light leave the aperture of an optical fibre along the principal axis of the fibre;

Figure 2 is a vertical sectional view of a system of this invention, which has a focusing means comprising two parabolic mirrors,

Figure 3 is a vertical sectional view of another system of this invention, which has a focusing means in the form of a Fresnel lens,

Figure 4 is a vertical sectional view of a system of this invention, which has a focusing means comprising two parabolic mirrors and a means for transferring the focused solar-produced energy to another location,

Figure 5 is a vertical sectional view of another system of this invention, which has a focusing means in the form of a Fresnel lens and a means for transferring the focused solar-produced energy to another location,

Figure 6 is a vertical sectional view of an arrangement which is formed by compounding a number of the unit systems of Figure 4, and

Figure 7 is a vertical sectional view of an

**0016245**

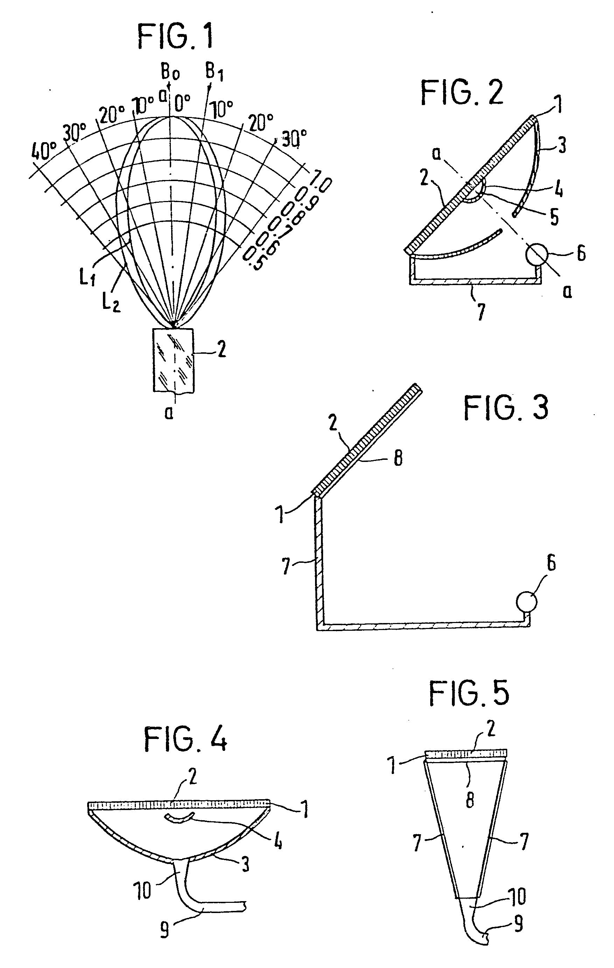

arrangement which is formed by compounding a number of the unit systems of Figure 5.

Referring generally to the drawings, a system for collecting solar energy comprises a faceplate for receiving parallel rays of sunlight. Each faceplate in the illustrated systems of the invention is in the form of a thin plate formed by a large number of optical fibres tied up or combined coherently in a bundle perpendicularly with respect to the plane of the plate. The diameters of the optical fibres are selected in a range of from 0.5 micron to 2.0 micron. The thickness of the faceplate is not generally a crucial or critical factor, but may be in a range of three to ten millimetres.

With such a faceplate, the rays of light issuing from each optical fibre of the faceplate always have a certain intensity component along the principal axis of each optical fibre, so that all the rays issuing from all the optical fibres of the faceplate always have the same intensity component, along the line of the principal axis of the faceplate, whenever solar rays impinge on the faceplate from a direction being within about the numerical aperture of the optical fibre of the faceplate. The numerical aperture is represented by

$$\sin \theta = \sqrt{n_1^2 - n_2^2},$$

wherein $\theta$ represents the angle of deviation from principal axis, $n_1$ represents the refractive index of the optical fibre, and $n_2$ represents the refractive index of the material surrounding the optical fibre. The numerical aperture value varies depending on $n_1$ and $n_2$, but is exemplified at about 39°. Thus, the faceplate of the illustrated systems can produce, from all its undersurface, rays having a certain strength or intensity in the form of a component parallel to the principal axis of the faceplate, whenever solar rays enter the faceplate from a direction within a space defined by a cone which is formed by rotating around the principal axis of the faceplate, a line which is at an angle of about 39° with respect to the principal axis of the faceplate. The parallel rays produced can be easily focused by a single fixed means for focusing parallel rays having a definite direction. This faceplate therefore obviates the necessity for follower means for following the sun.

The optical fibres fall within a diameter range of from 0.5 to 2.0 microns, and the reason why the fibres work so effectively in this range is based on the principle of Fraunhofer diffraction and the principle of light path reversibility. Illustration of the factors involved will be easier if the incident rays are considered as rays at a single wavelength. The basic idea of this system is that each optical fibre diameter is selected from a diameter which is not larger than 1.22 $\lambda$, $\lambda$ being the wavelength of the incident light. The optical fibre diameter range of the faceplate of the system of this invention, namely 0.5—2.0 micron, was selected in due consideration of the effective sunlight wavelength band of 0.3—3.0 $\mu$m, and practical considerations of efficiency.

The reason why the diameter is critical, at not more than 1.22 $\lambda$, is as follows: if parallel light beams issue from the aperture of an optical fibre of an appropriate small diameter. Fraunhofer diffraction occurs, so that the beams issuing from the aperture generally form a three-dimensional intensity distribution pattern, that is, a directivity pattern consisting of a main lobe and subsidiary lobes. Generally, some region of zero intensity is formed between the main and subsidiary lobes. However, if the diameter of the aperture is suitably selected, only a main lobe will be formed. This suitable diameter can be derived from the following principle. Fraunhofer diffraction shows a lobe-like diffraction having a directivity coefficient

$$\left( \frac{2J_1(x)}{x} \right)^2,$$

wherein $J_1(x)$ is a Bessel function,

$$x = \frac{\pi d}{\lambda} \sin \gamma$$

d is the diameter of the aperture, $\lambda$ is the wavelength of the incident beams, and $\gamma$ is the angle between the incident direction of the beams and the principal axis of the aperture. When

$$\left( \frac{2J_1(x)}{x} \right)^2$$

becomes zero, x becomes about 3.83, and d/$\lambda$ becomes 1.22, in which case only the main lobe is formed. Accordingly, if the diameter of fibre is not larger than 1.22 $\lambda$, parallel beams which enter the aperture of the optical fibre along the principal axis thereof, pass through the fibre, and issue from another aperture thereof, form a directivity pattern having only a main lobe and no subsidiary lobes, as shown in Figure 1.

In Figure 1, lobe L1 is the directivity pattern based on Fraunhofer diffraction which occurs when parallel beams issue from the aperture of an optical fibre, the diameter of which is equal to 1.22 $\lambda$, $\lambda$ being the wavelength of the beams, and lobe L2 is the one produced when the diameter is 1.00 $\lambda$. In Figure 1, reference 2 denotes an optical fibre, and the angles 0°, 10°, 20°, 30° and so on are the angles of deviation from the principal axis a—a of the optical fibre, while the circular lines indicated by 1.0, 0.9 and so on are the lines representing relative light intensity, assuming that intensity at the principal axis a—a is 1.00. The above-mentioned reversibility principle teaches that the directivity pattern formed by beams which advance upward in Figure 1 can be wholly applied to beams which advance downward in Figure 1, so that the beams $B_0$ which enter the optical fibre 2 in a downward direction in Figure 1 along the principal axis a—a issue from the optical fibre as beams having an intensity component along the principal axis a—a of 1.0; the beams $B_1$ which enter the optical fibre 2 downwardly from a direction which deviates by 10° from the principal axis a—a issue from the optical fibre as beams having an intensity component along the principal axis a—a of 0.89; the beams of 20°, 0.63; the beams of 30°, 0.36; etc.

It will be seen from the foregoing theroretical considerations that the faceplate of this system permits parallel rays of sunlight which enter the optical fibres from any directions within the numerical aperture of the optical fibres and which thus pass through the optical fibres to issue from the exit apertures of all the optical fibres, in the form of a number of rays which are all parallel one another and to the principal axis of the faceplate, while being of a certain intensity related to the angle formed between the direction of incidence of the rays of sunlight on the faceplate and the principal axis of the faceplate. The parallel rays issuing from the faceplate can be easily focused by a single focusing means which is fixed with respect to the faceplate. Thus, it will be seen that this faceplate makes it possible to eliminate the necessity of strictly following the direction of incidence of the rays of sunlight.

The means for focusing the parallel rays from the optical fibres of the faceplate may be of any suitable form, whether conventional or novel. An example of such a means is a concave parabolic mirror accompanied with a small secondary convex parabolic mirror positioned at the focal area of the concave parabolic mirror. Another example of such a focusing means is a Fresnel lens.

Reference will now be made to Figure 2 which shows an example of a system according to the invention, in which the above-mentioned parabolic mirrors are positioned underneath, that is, beind the faceplate 1 with optical fibres 2. The primary concave parabolic mirror is indicated at 3 and is arranged for focusing the parallel rays issuing from the fibres of the faceplate, so that the focus of the concave parabolic mirror surface is formed under the faceplate. The small secondary convex parabolic mirror 4 is positioned at the focal area of the concave parabolic mirror 3. The aperture diameter of the secondary parabolic mirror 4 can be selected from the range of 1/20—1/10 times the aperture diameter of the primary concave parabolic mirror 3, so that rays reflected from the convex surface of the secondary mirror 4 can focus on or below the surface of the primary mirror 3, according to the purpose of using the collecting system. Reference 5 represents the focus of the primary concave parabolic mirror 3, reference 6 is an objective substance or means for applying the solar energy collected, reference 7 is a means for fixing the means 6 in position and a—a is the principal axis of the faceplate 1. The rays of sunlight pass through the optical fibres 2 of the faceplate 1 and issue therefrom in the form of rays having an intensity component parallel to the principal axis a—a; the parallel rays are reflected at the surface of mirror 3 to focus on the surface of the mirror 4, and are then reflected therefrom to focus on the substance or means 6, so that the latter is heated.

Figure 3 shows another example of the collecting system of this invention using a Fresnel lens, wherein reference 8 is Fresnel lens, and references 1, 2, 6, 7 each denote the same components as in Figure 2.

It will be seen from Figures 2 and 3 that the system using the parabolic mirrors is rather thinner than the system using the Fresnel lens means.

The collected and focused solar energy can be transferred to a remote place, and Figure 4 shows an example of a system for transferring focused solar energy to a remote place. The rays reflected at the surface of the secondary mirror are focused at the central area of the surface of the primary mirror 3, the mirror 3 having an opening at that position to pass rays therethrough. The focused rays are then transferred through a bundle of optical fibres 9 for transmission to a remote place. The diameters of the optical fibres for transmission purposes may be defined by economic considerations. The bundle of optical fibres 9 is connected to a transparent cone 10 which in turn is connected to the primary mirror 3 at its central opening.

Figure 5 shows another example of a system for transmission of the solar energy to a remote place, in which a Fresnel lens 8 is used as a means for focusing the incident rays of sunlight. The general construction of the Figure 5 system is similar to that shown in Figure 4.

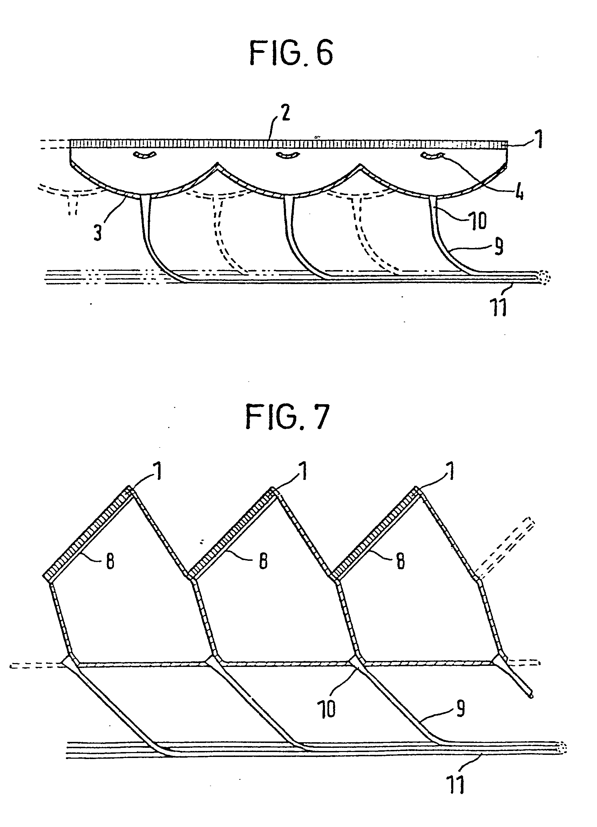

Figure 6 shows an example of a composite or combined arrangement which is formed by combining a number of the unit systems shown in Figure 4. All of the bundles 9 of optical fibres from the unit systems are gathered together to make a larger bundle 11 for transfer of the solar energy to a single remote location.

Figure 7 shows another example of a combined arrangement comprising a plurality of the unit systems shown in Figure 5, with fibre bundles 9 and cones 10.

The faceplate may be one large substantially flat or planar plate as in Figure 6, or it may be of an angular configuration as shown in Figure 7, formed by a plurality of compounded faceplates and comprising a generally sawtooth shape in cross-section, one portion of each sawtooth comprising a respective faceplate and the other portion of each sawtooth being a nonfaceplate portion, with the faceplates parallel to each other. The faceplates shown in Figures 6 and 7 are interchangeable with each other. The faceplate of Figure 6 will be generally suitable for use on a surface facing in the direction of the sun, for example an inclined roof, while the faceplate with the cross-sectional form of Figure 7 will be suitable for use on surfaces such as horizontal roofs or vertical walls. Many other forms and modifications in regard to compounding units of the collecting system may be employed without thereby departing from the scope of this invention.

The illustrated system of this invention enjoys inter alia the following advantages:

1) The system obviates the need for a mechanism for strictly following the direction of the sun;

2) The system can be made in very thin form, using the parabolic mirrors;

3) The solar energy can be collected underneath the collecting system faceplate;

4) Collected solar energy can be easily transferred to and received at a remote place;

5) The system is cheap and easy to install at any suitable position such as a roof, wall, water surface and the like;

6) The system promises a very high coefficient of solar energy collection without resorting to use of a special follower mechanism.

This system can be widely used, for example, as a collector for domestic solar heating and cooling and as a high temperature collector for use in a solar electric power plant or a solar furnace.

## Claims

1. A system for collecting radiant energy of sunlight, including a faceplate (1) for receiving parallel rays of sunlight, which is made up of a large number of optical fibres (2) which are each of a diameter ranging from 0.5 micron to 2.0 micron and which are combined coherently in a bundle perpendicular to the plane of the faceplate (1), and a means (3, 4, 5) for focusing the parallel rays issuing from the optical fibres (2) of the faceplate thereby to concentrate the radiant energy outside the system.

2. A system as claimed in claim 1 wherein the focusing means includes a concave parabolic mirror (3) disposed below the faceplate (1) and having an opening at the central part of the concave parabolic mirror, and a convex parabolic mirror (4) arranged at the focal area of the concave parabolic mirror (3) for reflecting the rays reflected from the concave parabolic mirror (3) to focus said rays at or below the opening of the concave parabolic mirror (3).

3. A system as claimed in claim 2 wherein a means (6) for receiving said focused rays thereby to utilise the solar energy is placed directly at a position at the focus of the convex parabolic mirror (4) and below the concave parabolic mirror (3).

4. A system as claimed in claim 2 wherein the central opening of the concave parabolic mirror (3) is connected to a transparent cone (10) which is in turn connected to a bundle of optical fibres (9) for transmission of the focused rays to another place.

5. A system as claimed in claim 1 wherein the focusing means is a Fresnel lens (8).

6. A system as claimed in claim 5 including a means (6) for receiving the focused rays thereby to utilise the solar energy, the means (6) being directly placed at the focus of the Fresnel lens.

7. A system as claimed in claim 5 wherein the focal area of the Fresnel lens (8) is connected to a transparent cone (10) which is in turn connected to a bundle of optical fibres (9) for transmission of the focused rays to another place.

8. A system as claimed in any of the preceding claims wherein the thickness of the faceplate is in a range of 3 to 10 mm.

9. An arrangement comprising a plurality of systems as claimed in any one of the preceding claims, and respective bundles (9) of optical fibres connected to the focal area of the focusing means of each system, for transmission of the collected solar energy to another place.

10. An arrangement as claimed in claim 9 wherein the faceplates (1) of the plurality of systems are combined to form a single planar faceplate.

11. An arrangement as claimed in claim 9 wherein the faceplates (1) of the plurality of systems are combined to form a compounded faceplate of general sawtooth-shape in cross-section, each sawtooth configuration comprising a portion formed by a faceplate of a respective system and a non-faceplate portion, with the respective faceplate portions arranged parallel to one another.

## Patentansprüche

1. System zum Sammeln von Strahlungsenergie der Sonne, umfassend eine Schirmplatte (1) zum Auffangen paralleler Sonnenlichtstrahlen, die aus einer großen Anzahl optischer Fasern (2) aufgebaut ist, von denen jede einen Durchmesser im Bereich von 0,5 $\mu$m bis 2,0 $\mu$m aufweist und die in kohärenter Weise zu einem Bündel senkrecht zur Ebene der Schirmplatte (1) vereinigt sind, und eine Einrichtung (3, 4, 5) zu Fokussierung der von den optischen Fasern (2) der Schirmplatte ausgehenden parallelen Strahlen, um so außerhalb des Systems die Strahlungsenergie zu konzentrieren.

2. System nach Anspruch 1, bei dem die Fokussierungseinrichtung einen konkaven parabolischen Spiegel (3) umfaßt, der unterhalb der Schirmplatte (1) angeordnet ist und in seiner Mitte eine Öffnung aufweist, sowie einen konvexen parabolischen Spiegel (4) umfaßt, der in der Brennebene des konkaven parabolischen Spiegels (3) angeordnet ist, um die vom konkaven parabolischen Spiegel (3) reflektierten Strahlen zu reflektieren und die Strahlen an oder

9      **0 016 245**      10

unter der Öffnung des konkaven parabolischen Spiegels (3) zu fokussieren.

3. System nach Anspruch 2, bei dem eine Einrichtung (6) zum Auffangen der fokussierten Strahlen und dadurch zum Benutzen der Sonnenenergie direkt an einer Stelle am Brennpunkt des konvexen parabolischen Spiegels (4) und unter dem konkaven parabolischen Spiegel (3) angeordnet ist.

4. System nach Anspruch 2, bei dem die zentrale Öffnung des konkaven parabolischen Spiegels (3) mit einem transparenten Konus (10) verbunden ist, der seinerseits mit einem Bündel optischer Fasern (9) zur Übertragung der fokussierten Strahlen an eine andere Stelle verbunden ist.

5. System nach Anspruch 1, bei dem die Fokussierungseinrichtung eine Fresnel Linse (8) ist.

6. System nach Anspruch 5, umfassend eine Einrichtung (6) zum Auffangen der fokussierten Strahlen und dadurch zum Benutzen der Sonnenenergie, welche Einrichtung (6) direkt am Brennpunkt der Fresnel Linse angeordnet ist.

7. System nach Anspruch 5, bei dem die Brennebene der Fresnel Linse (8) mit einem transparenten Konus (10) verbunden ist, der seinerseits mit einem Bündel optischer Fasern (9) zur Übertragung der fokussierten Strahlen an eine andere Stelle verbunden ist.

8. System nach einem der vorhergehenden Ansprüche, bei dem die Dicke der Schirmplatte in einem Bereich von 3 bis 10 mm liegt.

9. Anordnung umfassend eine Vielzahl von Systemen nach einem der vorhergehenden Ansprüche und jeweilige Bündel (9) optischer Fasern, die mit der Brennebene der Fokussiereinrichtung eines jeden Systems zur Übertragung der gesammelten Sonnenenergie an eine andere Stelle verbunden sind.

10. Anordnung nach Anspruch 9, bei dem die Schirmplatte (1) der Vielzahl von Systemen zu einer einzigen Schirmplatte vereinigt sind.

11. Anordnung nach Anspruch 9, bei der die Schirmplatten (1) der Vielzahl von Systemen zur Bildung einer Verbundschirmplatte von allgemein sägezahnförmigem Querschnitt kombiniert sind, wobei jeder Sägezahn aus einem von einer Schirmplatte eines jeweiligen Systems gebildeten Teil und einem Nicht-Schirmplattenteil gebildet ist und die jeweiligen Schirmplattenteile parallel zueinander angeordnet sind.

**Revendications**

1. Système pour recueillir l'énergie rayonnant de la lumière du soleil, comprenant une plaque frontale (1) pour recevoir des rayons parallèles de la lumière du soleil, qui est formée d'un grand nombre de fibres optiques (2) qui ont chacune un diamètre compris entre 0,5 $\mu$ et 2,0 $\mu$ et qui sont combinées de façon cohérente en un faisceau perpendiculaire au plan de la plaque frontale (1) et un moyen (3, 4, 5) pour focaliser les rayons parallèles sortant des fibres optiques (2) de la plaque frontale afin de concentrer ainsi l'énergie rayonnant en dehors du système.

2. Système selon la revendication 1 où le moyen de focalisation comprend un miroir parabolique concave (3) disposé en dessous de la plaque frontale (1) et ayant une ouverture à la partie centrale du miroir parabolique concave, et un miroir parabolique convexe (4) agencé à la zone focale du miroir parabolique concave (3) pour réfléchir les rayons réfléchis par le miroir parabolique concave (3) pour focaliser lesdits rayons sur ou en dessous de l'ouverture du miroir parabolique concave (3).

3. Système selon la revendication 2 où un moyen (6) pour recevoir lesdits rayons focalisés afin d'utiliser ainsi l'énergie solaire est placé directement en une position au foyer du miroir parabolique convexe (4) et en dessous du miroir parabolique concave (3).

4. Système selon la revendication 2 où l'ouverture centrale du miroir parabolique concave (3) est connectée à un cône transparent (10) qui, à son tour, est connecté à un faisceau de fibres optiques (9) pour transmission des rayons focalisés en un autre emplacement.

5. Système selon la revendication 1 où le moyen de focalisation est une lentille de Fresnel (8).

6. Système selon la revendication 5 comprenant un moyen (6) pour recevoir les rayons focalisés afin d'utiliser ainsi l'énergie solaire, le moyen (6) étant directement placé au foyer de la lentille de Fresnel.

7. Système selon la revendication 5 où la zone focale de la lentille de Fresnel (8) est connectée à un cône transparent (10) qui, à son tour, est connecté à un faisceau de fibres optiques (9) pour transmission des rayons focalisés en un autre emplacement.

8. Système selon l'une quelconque des revendications précédentes où l'épaisseur de la plaque frontale est comprise entre 3 et 10 mm.

9. Agencement comprenant un certain nombre de systèmes selon l'une quelconque des revendications précédentes, et des faisceaux respectifs (9) de fibres optiques connectées à la zone focale du moyen de focalisation de chaque système pour transmission de l'énergie solaire recueillie vers un autre emplacement.

10. Agencement selon la revendication 9, où les plaque frontales (1) des systèmes sont combinées pour former une seule plaque frontale plane.

11. Agencement selon la revendication 9, où les plaques frontales (1) des systèmes sont combinées pour former une plaque frontale composée ayant généralement une forme en dents de scie en coupe transversale, chaque configuration en dents de scie comprenant une partie formée par une plaque frontale d'un système respectif et une partie sans plaque frontale, les parties respectives de plaque frontale étant agencées parallèlement les unes aux autres.

# FIG. 1

# FIG. 2

# FIG. 3

# FIG. 4

# FIG. 5

# FIG. 6

# FIG. 7